# EUROPEAN PATENT APPLICATION

(11) **EP 1 895 442 A2**
(43) Date of publication of application: **05.03.2008**
(21) Application number: 07253096.7
(22) Date of filing: 07.08.2007
(51) Int. Cl.: G06F 21/00

(54) **Image forming apparatus, data restoration method, and recording medium**

(30) Priority: 14.08.2006 JP 2006221260
(71) Applicant: Ricoh Company, Ltd., Tokyo 143-8555 (JP)
(72) Inventor: Ehara, Mikinori, Yokohama-shi, Kanagawa (JP)
(74) Representative: White, Duncan Rohan

(57) **Abstract**

An image forming apparatus (1) is disclosed that determines whether a computer virus is contained in data and repairs or deletes the data found infected with the computer virus. The apparatus (1) includes determination means (75) for determining whether data are necessary for operating the apparatus (1) when the data found infected with a computer virus are repaired or deleted; and restoration means (73) for restoring the data if it is determined that the data are necessary for operating the apparatus (1).

## Description

### BACKGROUND OF THE INVENTION

### 1. Field of the Invention

The present invention relates generally to image forming apparatuses, data restoration methods, and recording media and, in particular, to an image forming apparatus having a protective function against a computer virus (hereinafter referred to simply as a virus), a data restoration method for use in the image forming apparatus, and a recording medium.

### 2. Description of the Related Art

In recent years and continuing to the present, image forming apparatuses having multiple functions such as a printer, a scanner, a facsimile, and a copier are becoming pervasive. Generally, such image forming apparatuses are called multi-function peripherals.

Multi-function peripherals are connected to a network so that their functions can be shared by plural users. However, the multi-function peripherals connected to the network are liable to be infected by a computer virus. Note that virus infection can be caused by a number of factors.

For example, the multi-function peripherals can possibly be infected by a virus as they receive e-mail with virus-infected data attached. As another example, a virus-infected print job sent to the multi-function peripherals can cause their virus infection.

The virus that infects the multi-function peripherals can adversely affect the operation thereof. In some cases, the virus can cause the shutdown of the entire multi-function peripherals. Moreover, the virus-infected multi-function peripherals can infect other equipment on the network with the virus.

Assume that the multi-function peripherals periodically transmit their status data to the server on the network. In a case where the multi-function peripherals are infected with a virus, the status data transmitted from the multi-function peripherals to the server can contain the virus. The virus contained in the status data will infect the server.

When the server transmits any data to other equipment, the data can be infected with the virus. Accordingly, the virus will infect such other equipment while in communication with the server. Thus, the virus can adversely affect such other equipment on the network. Therefore, even if a single multi-function peripheral is infected with a virus, the network as a whole may possibly crash.

In order to deal with such a problem, there is disclosed, for example, Patent Document 1 as a related art case for protecting multi-function peripherals against the threat of a computer virus. Patent Document 1 pertains to a multi-function peripheral having a virus protection tool. The multi-function peripheral of Patent Document 1 detects whether it is infected with a virus by using the virus protection tool and performs corrective actions if a virus is detected. Patent Document 1: JP-A-2005-229611

In Patent Document 1, if a virus-infected file is detected, the repair of the file is attempted. If the file cannot be repaired, it is either isolated or deleted.

In the event that a file is lost because of its isolation or deletion when virus-infected data represent important files for operating an image forming apparatus, the normal operation of the image forming apparatus cannot be ensured.

Furthermore, examples of equipment that can possibly be infected with a virus include an information processing apparatus such as a PC (personal computer). If a virus is detected in a PC, the user determines the necessity of the virusdetected file and can delete it if it is unnecessary.

In the case of multi-function peripherals, however, the user cannot determine whether a virus-infected file is necessary for operating an image forming apparatus, making it inevitable that the multi-function peripherals themselves must determine the necessity of the file. Since the multi-function peripherals are used by an unspecified number of users, they are required to take appropriate measures, if infected with a virus, and be automatically restored to normal operation.

The present invention is made in view of the above points and has an object of providing an image forming apparatus, a data restoration method, and a recording medium capable of restoring the apparatus to normal operation even if data necessary for operating the apparatus are infected with a virus.

### SUMMARY OF THE INVENTION

In order to solve the above problems, according to an aspect of the present invention, there is provided an image forming apparatus that determines whether a computer virus is contained in data and repairs or deletes the data found infected with the computer virus. The apparatus comprises determination means for determining whether the data are necessary for operating the apparatus when the data found infected with a computer virus are repaired or deleted; and restoration means for restoring the data if it is determined that the data are necessary for operating the apparatus.

Note that the application of any combination of the constituents, expressions or constituents of the present invention to a method, an apparatus, a system, a computer program, a recording medium, a data structure, or the like is also effective as the embodiments of the present invention.

According to a preferred embodiment of the present invention, it is possible to provide an image forming apparatus, a data restoration method, and a recording medium capable of restoring the apparatus to normal operation even if data necessary for operating the apparatus are infected with a virus.

### BRIEF DESCRIPTION OF THE DRAWINGS

FIG. 1 is a system configuration diagram showing an example including a multi-function peripheral according to the embodiment of the present invention;
FIG. 2 is an external perspective view schematically showing the multi-function peripheral;
FIG. 3 is a block diagram showing the electrical connections between the respective sections of the multi-function peripheral;
FIG. 4 is a plan view showing the configuration of the operations panel P;
FIG. 5 is a process block diagram showing a partial configuration of the multi-function peripheral that performs virus check processing;
FIG. 6 is a flowchart showing an example of a virus check at data reception;
FIG. 7 is a processing block diagram showing a partial configuration of the multi-function peripheral that performs virus check processing;
FIG. 8 is a flowchart showing an example of a virus check when the reading of data is performed via an OS;
FIG. 9 is a flowchart showing a process example where virus-infected data detected with real-time retrieval are deleted;
FIG. 10 is a schematic representation of data areas in a storage device;
FIG. 11 is a schematic representation where system data are restored by the use of a storage medium;
FIG. 12 is a schematic representation where system data are restored by the use of backup data on a server; and
FIG. 13 is a schematic representation of data areas in a storage device where writing of data is forbidden in a system area by the use of EWF.

### DETAILED DESCRIPTION OF THE PREFERED EMBODIMENTS

Next, referring to the accompanying drawings, a description is made of the best mode for carrying out the present invention based on the embodiments below. This embodiment describes, as an example of an image forming apparatus, a so-called digital color multi-function peripheral (hereinafter referred to simply as a multi-function peripheral) in which are integrated a copy function, a facsimile (FAX) function, a print function, a scanner function, a distribution function that distributes input images (the document images scanned by the scanner function and the images input by the copy function or the FAX function), and the like. Note that the present invention is also applicable to a digital input/output device and the like.

In this embodiment; detecting and processing a computer virus in the multi-function peripheral is performed according to that performed in a personal computer with an operating system such as Windows (Trade Mark) or Macintosh, and the detailed description thereof is omitted herein.

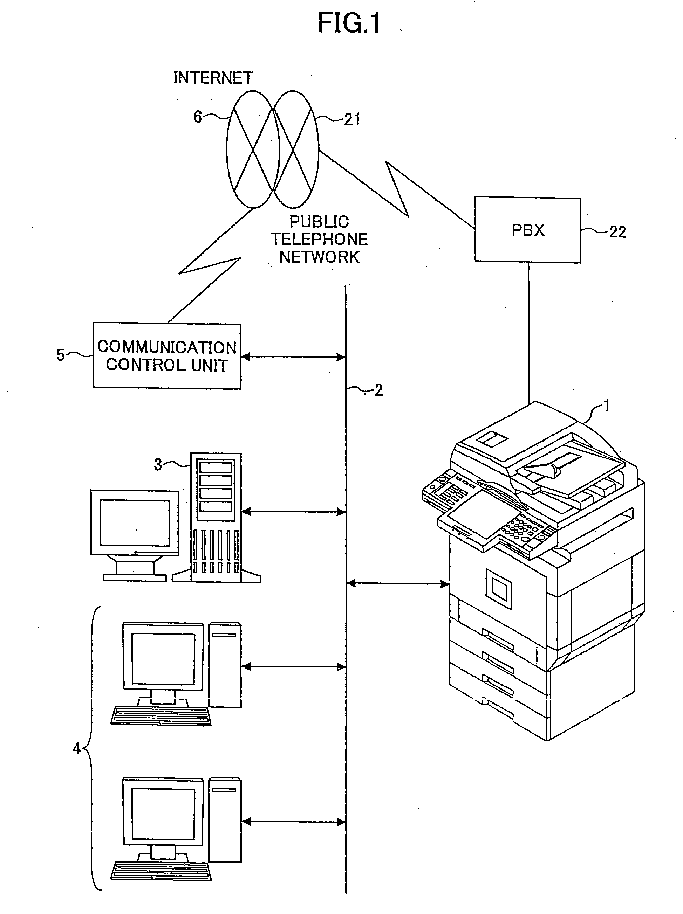

FIG. 1 is a system configuration diagram showing an example including the multi-function peripheral according to the embodiment of the present invention. The system as shown in FIG. 1 is composed of the multi-function peripheral 1, a LAN (Local Area Network) 2, a server computer 3, client computers 4, a communication control unit 5, the Internet 6, a public telephone network 21, and a PBX (Private Branch Exchange) 22. Note that the LAN 2 and the Internet 6 are examples of communications networks.

The multi-function peripheral 1 is connected to the server computer 3 that performs various information processing tasks and the client computers 4 via the LAN 2. The server computer 3 supports, for example, FTP (File Transfer Protocol) and HTTP (Hypertext Transfer Protocol) and achieves the functions of a Web server and a DNS (Domain Name Server). Furthermore, the multi-function peripheral 1 is connected to the PBX 22 communicating with the public telephone network 21 and capable of communicating with a remote facsimile machine.

In other words, this system establishes an environment in which image processing functions such as an image inputting function (scanner function), an image outputting function (print function), and an image accumulating function provided in the multi-function peripheral 1 can be shared on the LAN 2. Such a system is connected to the Internet 6 via the communication control unit 5 and configured to be capable of performing data communications with its external environment via the Internet 6.

Generally, the communication control unit 5 is in the form of a router, a switchboard, a modem, a DSL modem, or the like, but it is required to perform at least TCP/IP communication. Furthermore, the LAN 2 is not limited to wire communication, but wireless communication (such as infrared communication and radio wave communication) may be available. Furthermore, the LAN 2 may be of a type using an optical fiber.

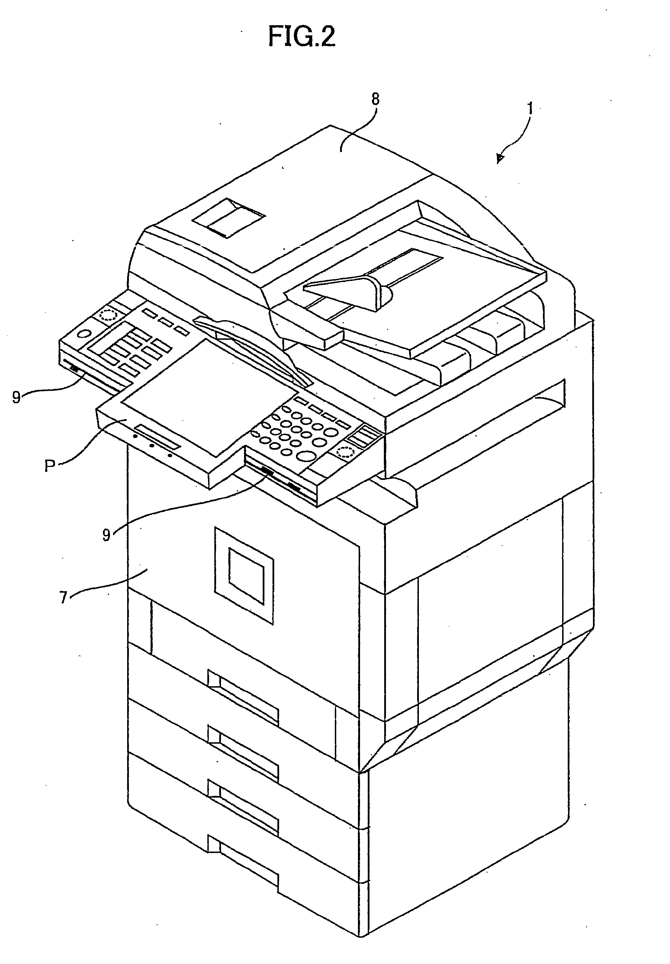

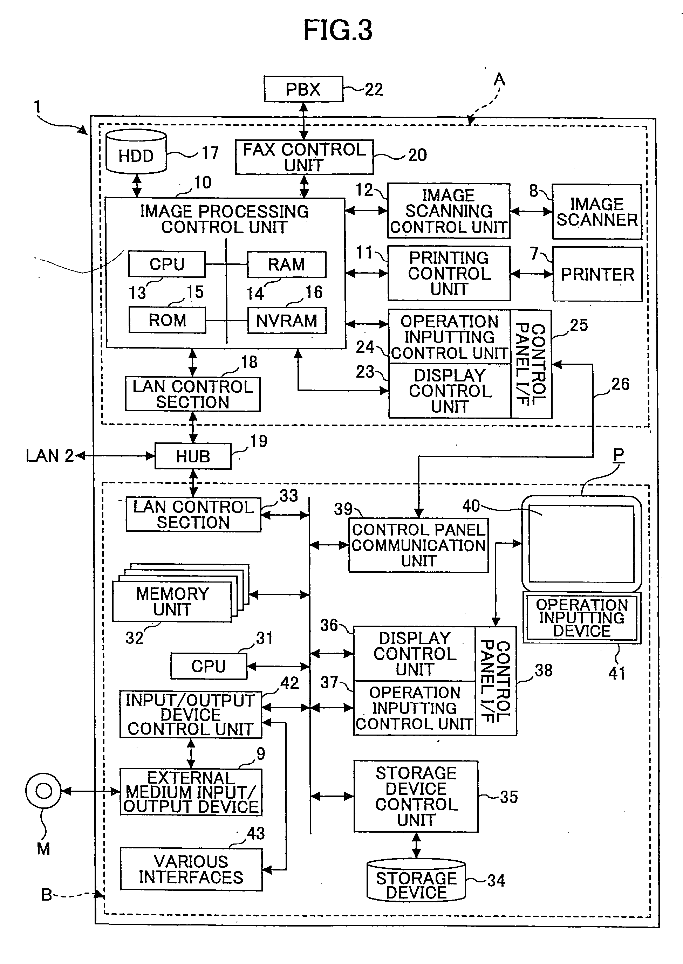

FIG. 2 is an external perspective view schematically showing the multi-function peripheral. FIG. 3 is a block diagram showing the electrical connections between the sections of the multi-function peripheral. As shown in FIG. 2, the multi-function peripheral 1 has an image scanner 8 that scans images from a document disposed on the upper side of a printer 7 as an image forming apparatus that forms images on a medium such as a transfer paper.

Furthermore, at the external surface of the image scanner 8 is provided an operations panel P which offers an operator a display and allows the operator to make various inputs such as function settings. Moreover, at the lower side of the operations panel P is provided an external medium input/output device 9 for reading program code, image data, and the like stored in a recording medium M (see FIG. 3) such as an optical disk and a flexible disk or for writing program code, image data, and the like in the recording medium M, in such a manner as to expose the inserting ports where the insertion of the recording medium M is allowed to the outside.

The configuration of the multi-function peripheral 1 is roughly divided into an image processing unit section A and an information processing unit section B. The printer 7 and the image scanner 8 belong to the image processing unit section A. On the other hand, the operations panel P and the external medium input/output device 9 belong to the information processing unit section B. Note that the multi-function peripheral 1 further has a HUB 19 as a concentrator.

The image processing unit section A is composed of the printer 7, the image scanner 8, an image processing control unit 10, a printing control unit 11, an image scanning control unit 12, a HDD (Hard Disk Drive) 17, a LAN control section 18, a FAX control unit 20, a display control unit 23, an operation inputting control unit 24, and a control panel I/F 25.

The image processing control unit 10 controls all the image processing in the image processing unit section A and is connected to the printing control unit 11 that controls the printer 7 and to the image scanning control unit 12 that controls the image scanner 8. The printing control unit 11 outputs printing instructions including image data to the printer 7 in accordance with the control by the image processing control unit 10, thereby causing the printer 7 to form images on a medium such as a transfer paper and output the same. The printer 7 is capable of performing printing in full color. As a printing method of the printer 7, an electrophotographic method, an ink jet method, a sublimation thermal transfer method, a silver halide photographic method, a direct thermosensitive recording method, a melting thermal transfer method, etc., are available.

The image scanning control unit 12 drives the image scanner 8 under the control of the image processing control unit 10, scans reflected light of lamp irradiation with respect to the front surface of a document by condensing it on a light receiving element (for example, a CCD (Charge Coupled Device)) through a mirror and a lens, and applies A/D conversion thereto so as to generate digital image data in eight-bit of RGB.

The image processing control unit 10 is composed of a microcomputer in which a CPU (Central Processing Unit) 13 as a main processor, a RAM (Random Access Memory) 14 where the image data read out from the image scanner 8 are temporarily stored to be used for image formation by the printer 7, a ROM (Read Only Memory) 15 where control programs and the like are stored, and a NVRAM (Nonvolatile Random Access Memory) 16 that stores system logs, system settings, log information, and the like and is capable of holding data even when power is turned off. These components are connected to one another through a bus.

Furthermore, the image processing control unit 10 is connected to the HDD 17 as a storage device for accumulating a large amount of image data, job history, and the like; the LAN control section 18 for connecting the image processing unit section A to the LAN 2 via the HUB 19; and the FAX control unit 20 for controlling a FAX. The FAX control unit 20 is connected to the PBX 22 communicating with the public telephone network 21. Thus, the multi-function peripheral 1 is capable of communicating with a remote facsimile machine.

In addition, the image processing control unit 10 is connected to the display control unit 23 and the operation inputting control unit 24. The display control unit 23 is connected to the information processing unit section B via a communication cable 26 connected to the control panel I/F 25. The display control unit 23 outputs image display control signals to the information processing unit section B under the control of the image processing control unit 10, thereby controlling image display relative to the operations panel P of the information processing unit section B.

Furthermore, the operation inputting control unit 24 is connected to the information processing unit section B via the communication cable 26 connected to the control panel I/F 25. The operation inputting control unit 24 inputs input control signals in accordance with function settings and inputting operations by an operator through the operations panel P of the information processing unit section B under the control of the image processing control unit 10. In other words, the image processing unit section A is capable of directly monitoring the operations panel P of the information processing unit section B via the communication cable 26.

Thus, the image processing unit section A is configured to have the communication cable 26 connected to the image processing unit of a conventional image processing apparatus so as to use the operations panel P of the information processing unit section B. In other words, the display control unit 23 and the operation inputting control unit 24 of the image processing unit section A are connected to the operations panel P.

With these configurations, the image processing unit section A analyzes print data and print commands as image information from the outside (the server computer 3, the client computers 4, the facsimile machine, and the like), develops as output image data the print data into bitmap data so as to be printed, and analyzes a print mode based on the commands to determine its operation. The image processing unit section A receives the print data and the commands via the LAN control section 18 or the FAX control unit 20 to operate.

The image processing unit section A is capable of transferring to the outside (the server computer 3, the client computers 4, the facsimile machine, and the like) print data stored in the RAM 14 and the HDD 17, scanned document data, output image data of the print data and the scanned document data processed for outputting, compressed data of the print data, the scanned document data, and the output image data.

Furthermore, the image processing unit section A transfers the image data scanned by the image scanner 8 to the image processing control unit 10, corrects signal degradation accompanied by the quantization to an optical system and a digital signal, and writes the image data in the RAM 14. The image data thus stored in the RAM 14 are converted into output image data by the printing control unit 11 and output to the printer 7.

The information processing unit section B is composed of a microcomputer controlled by a universal OS (Operating System) for use in an information processing apparatus generally called a PC. The information processing unit section B is composed of a CPU 31 as a main processor, a memory unit 32, a LAN control section 33, a storage device 34, a storage device control unit 35, a display control unit 36, an operation inputting control unit 37, a control panel I/F 38, a control panel communication unit 39, a display device 40, an operation inputting device 41, an input/output device control unit 42, and various interfaces 43.

Furthermore, the CPU 31 is connected to the memory unit 32 and the storage device control unit 35 through a bus. The memory unit 32 is composed of a RAM as a work area for the CPU 31 and a ROM storing a boot program and the like. The storage device control unit 35 controls inputting/outputting of data to/from the storage device 34 such as a HDD storing an OS and application programs.

Furthermore, the CPU 31 is connected to the LAN control section 33 as a communication interface for connecting the information processing unit section B to the LAN 2 via the HUB 19. The IP address as a network address allocated to the LAN control section 33 is different from that allocated to the LAN control section 18 of the image processing unit section A.

In other words, two IP addresses are allocated to the multi-function peripheral 1 of this embodiment. The LAN 2 is connected to each of the image processing unit section A and the information processing unit section B, thereby making it possible for the LAN 2 to perform data exchange with the information processing unit sections A and B.

Note that since the multi-function peripheral 1 is connected to the LAN 2 via the HUB 19, it appears that only one LAN cable is connected to the multi-function peripheral 1. Accordingly, it is made possible to easily handle wire connection and the like without disconfiguration.

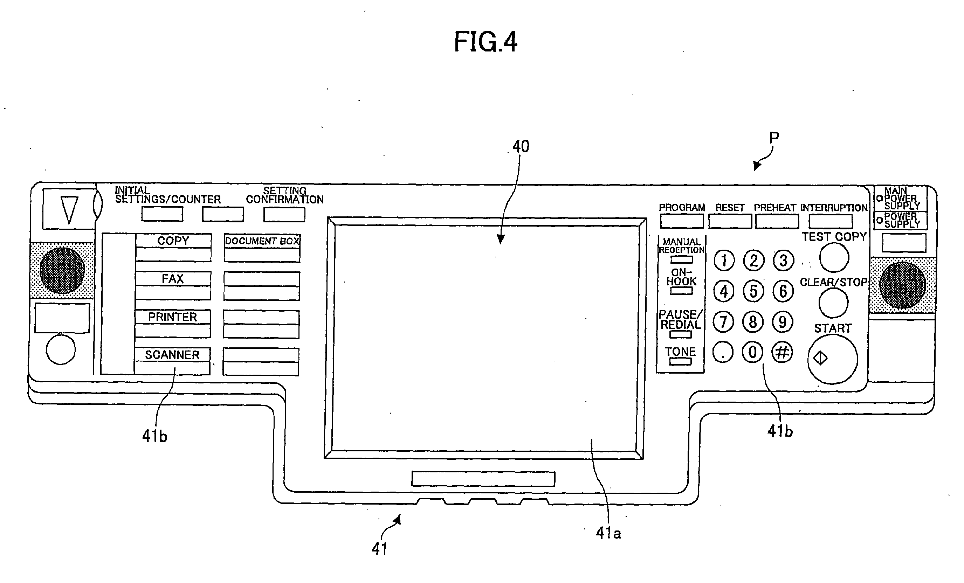

The CPU 31 is connected to the display control unit 36 and the operation inputting control unit 37 that control the operations panel P. FIG. 4 is a plan view showing the configuration of the operations panel P. As shown in FIG. 4, the operations panel P is composed of the display device 40 such as a LCD (Liquid Crystal Display) and the operation inputting device 41.

The operation inputting device 41 is composed of a touch panel 41a of an ultrasonic elastic wave system or the like that is laminated on the front surface of the display device 40 and a keyboard 41b having plural keys. The keyboard 41b is provided with a start key to start image scanning, a numeric keypad to input numbers, a scanning condition setting key to set the destination of scanned image data, a clear key, and the like.

In other words, the display control unit 36 outputs image display control signals to the display device 40 via the control panel I/F 38 and causes the display device 40 to display given images in accordance with the image display control signals. On the other hand, the operation inputting control unit 37 receives input control signals in accordance with function settings and inputting operations by an operator through the operation inputting device 41 via the control panel I/F 38.

In addition, the CPU 31 is connected to the control panel communication unit 39 connected to the control panel I/F 25 of the image processing unit section A via the communication cable 26. The control panel communication unit 39 receives the image display control signals output from the image processing unit section A. Furthermore, the control panel communication unit 39 transfers input control signals in accordance with function settings and inputting operations by an operator through the operations panel P to the image processing unit section A.

As described in detail below, the image display control signals from the image processing unit section A received at the control panel communication unit 39 are subjected to a data conversion process for the display device 40 of the operations panel P and output to the display control unit 36. The input control signals in accordance with function settings and inputting operations by an operator through the operations panel P are subjected to a data conversion process to suit the specifications of the image processing unit section A and input to the control panel communication unit 39.

As described above, the storage device 34 stores an OS and application programs performed by the CPU 31. In this sense, the storage device 34 functions as a storage medium to store application programs.

In the multi-function peripheral 1, when the user turns on the power, the CPU 31 boots the boot program of the memory unit 32, reads the OS from the storage device 34 into the RAM of the memory unit 32, and boots the OS. The OS boots programs, reads and stores information in accordance with the operations by the user.

As a typical OS, Windows (Trade Mark), for example, is known. Operation programs running on such an OS are called application programs. The OS of the information processing unit section B may the same as that of information processing apparatuses (such as the server computer 3 and the client computers 4), namely, a universal OS (for example, Windows (Trade Mark)).

As described above, the multi-function peripheral 1 of this embodiment has mounted thereon the external medium input/output device 9 that reads program code, image data, and the like from the storage medium M storing the various program codes (control programs) such as an OS, device drivers, and various application programs, image data, and the like, or that writes program code, image data, and the like in the storage medium M.

Examples of the storage medium M include a flexible disk, a hard disk, an optical disk, a MO (magneto-optical) disk, a semiconductor medium, or the like. Examples of the optical disk include a CD-ROM, a CD-R, a CD-RW, a DVD-ROM, a DVD-RAM, a DVD-R, a DVD+R, a DVD-RW, a DVD+RW, or the like.

Examples of the external medium input/output device 9 include a flexible disk drive device, an optical disk drive device, a MO drive device, a medium drive device, or the like. Such the external medium input/output device 9 is controlled by the input/output device control unit 42 connected to the CPU 31 through a bus.

Accordingly, the application programs stored in the storage device 34 may be installed from the application programs stored in the storage medium M. Therefore, the storage medium M can be a storage medium storing application programs. Moreover, application programs may be fetched from the outside via, for example, the Internet 6 or the LAN 2 and installed in the storage device 34.

Note that the input/output device control unit 42 is also connected to various interfaces 43 such as USB, IEEE 1394, and SCSI and capable of being connected to various devices (such as a digital camera) via the various interfaces 43.

When transmitting/receiving the data to/from the LAN 2 via the HUB 19 or reading out/writing the data from/in the storage device M via the external medium input/output device 9, the multi-function peripheral 1 can determine whether the data are infected with a virus. Furthermore, the multi-function peripheral 1 can monitor the reading out/writing of data from/in the memory unit 32 or the storage device 34 via an OS all the time (in real time) and determine whether the data are infected with a virus.

Such processing is performed by the application programs that are stored in the storage device and read by the memory unit 32 to operate. Hereinafter, the process performed by the multi-function peripheral 1 is described. First, a description is made of a virus check when the multi-function peripheral 1 transmits/receives data via the LAN 2.

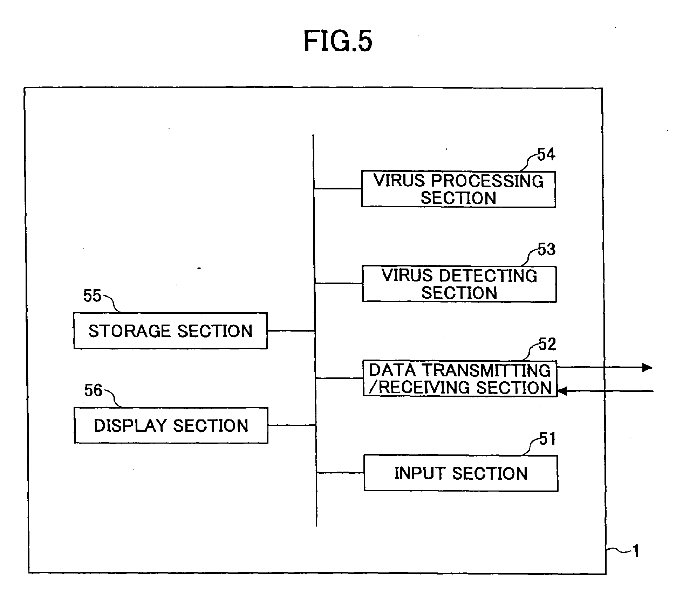

FIG. 5 is a process block diagram showing a partial configuration of the multi-function peripheral that performs a virus check. The multi-function peripheral 1 of FIG. 5 is composed of an input section 51, a data transmitting/receiving section 52, a virus detecting section 53, a virus processing section 54, a storage section 55, and a display section 56.

The input section 51 corresponds to the operation inputting control unit 37. The data transmitting/receiving section 52 corresponds to the LAN control section 33 of FIG. 3. The virus detecting section 53 corresponds to the CPU 31 and the memory unit 32. The virus processing section 54 corresponds to the CPU 31 and the memory unit 32. The storage section 55 corresponds to the storage device control unit 35. The display section 56 corresponds to the display control unit 36.

Upon receiving function settings and inputting operations by an operator through the operations panel P, the input section 51 determines the operation of transmitting/receiving data. The data transmitting/receiving section 52 transmits/receives e-mails, image files, and the like via the LAN 2. The virus detecting section 53 determines whether the data to be transmitted/received are infected with a virus. The virus processing section 54 repairs or deletes data if they are infected with a virus.

At data reception, the storage section 55 receives the data at the data transmitting/receiving section 52 and stores the data in the storage device 34. At data transmission, on the other hand, the storage section 55 reads the data from the storage device 34 and sends the data to the data transmitting/receiving section 52. The display section 56 displays the transmitting/receiving results of data, transmitted/received data, and a virus check.

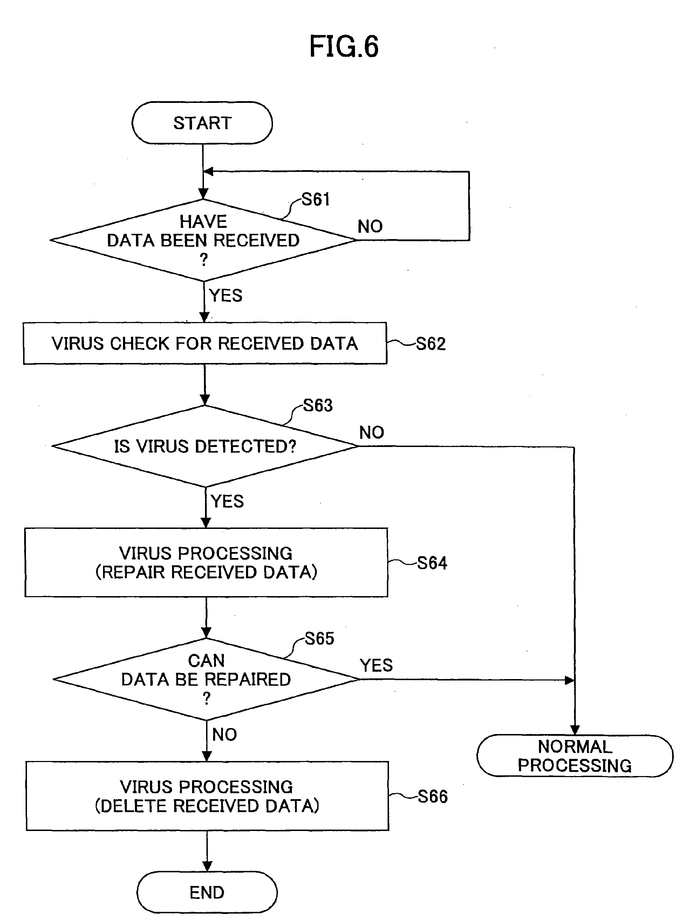

FIG. 6 is a flowchart showing an example of a virus check at data reception. First, in step S61, the data transmitting/receiving section 52 determines whether data have been received via the LAN 2. Upon receiving data, the data transmitting/receiving section 52 transmits the data to the virus detecting section 53.

Upon receiving the data from the data transmitting/receiving section 52, the virus detecting section 53 proceeds to step S62 to determine whether the received data are infected with a virus. The process then proceeds to step S63. If no virus is detected in the received data, the process proceeds to normal processing where the received data are stored in the storage section 55 or displayed on the display section 56. If a virus is detected in the received data, on the other hand, the process proceeds to step S64.

In step S64, the virus processing section 54 attempts to eliminate the virus from the received data. In other words, it attempts to repair the received data. The process then proceeds to step S65 where the virus processing section 54 determines whether the received data can be repaired (whether the attempt is successful). If the received data can be repaired, the process proceeds to normal processing. If the received data cannot be repaired, on the other hand, the process proceeds to step S66 where the virus processing section 54 deletes the received data to eliminate the virus and stops the data reception.

Also, at data transmission, the multi-function peripheral 1 determines whether data are infected with a virus before transmitting them in the same manner as at data reception. If the data are not infected with a virus, the multi-function peripheral 1 continues the transmission processing. If they are infected with a virus, on the other hand, the multi-function peripheral 1 acts against the virus. Furthermore, also when the multi-function peripheral 1 reads/writes the data in/from the storage medium M via the external medium input/output device 9, a virus check is performed in the same manner as the data transmission/reception via the LAN 2.

Next, a description is made of a virus check when the multi-function peripheral 1 performs the reading out/writing of data via an OS. Such a process is generally called real-time retrieval.

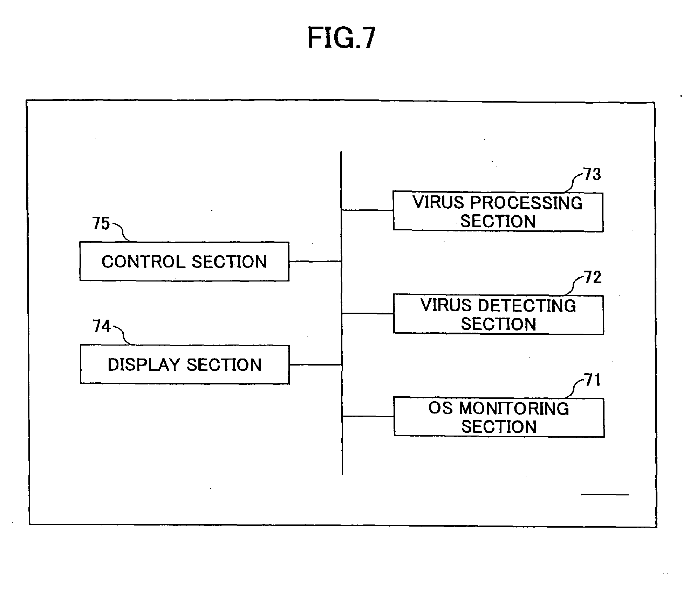

FIG. 7 is a processing block diagram showing a partial configuration of the multi-function peripheral that performs a virus check. The multi-function peripheral 1 of FIG. 7 is composed of an OS monitoring section 71, a virus detecting section 72, a virus processing section 73, a display section 74, and a control section 75.

The OS monitoring section 71 corresponds to the CPU 31 and the memory unit 32 of FIG. 3. The virus detecting section 72 corresponds to the CPU 31 and the memory unit 32. The virus processing section 73 corresponds to the CPU 31 and the memory unit 32. The control section 75 corresponds to the CPU 31 and the memory unit 32. The display section 74 corresponds to the display control unit 36.

The OS monitoring section 71 monitors the reading out/writing of data from/in the memory unit 32 or the storage device 34, which is performed via an OS. The virus detecting section 72 determines whether the data to be read out/written from/in the memory unit 32 or the storage device 34, which is performed via an OS, are infected with a virus.

The virus processing section 73 repairs and deletes data as virus processing if the data, which are to be read out/written from/in the memory unit 32 or the storage device 34 via an OS, are infected with a virus. The display section 74 displays the results of the virus check and the like. The control section 75 determines whether deleted data are necessary for operating the multi-function peripheral 1 when the data are deleted by the virus processing section 73 and controls operations such as data restoration at or after rebooting.

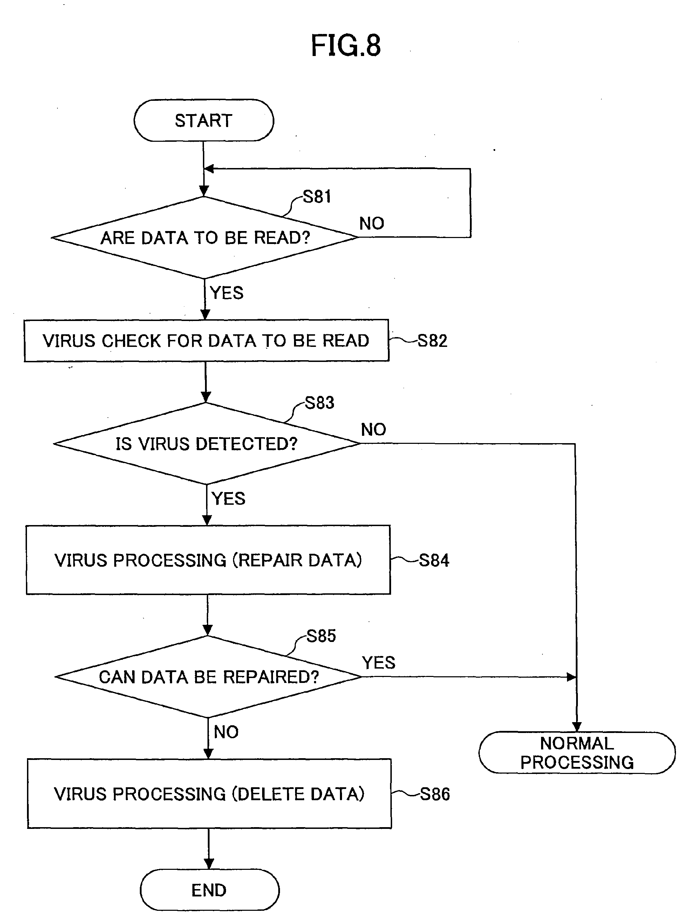

FIG. 8 is a flowchart showing an example of a virus check when reading out data is performed via an OS. First, in step S81, the OS monitoring section 71 determines whether an OS is to read out data. If it is determined that data are to be read out by the OS, the OS monitoring section 71 informs the virus detecting section 72 of the data to be read out by the OS.

Upon receiving the data to be read out by the OS from the OS monitoring section 71, the virus detecting section 72 proceeds to step S82 to check the data. The process then proceeds to step S83 where if no virus is detected in the data to be read out by the OS, the multi-function peripheral 1 proceeds to normal processing. If a virus is detected in the data, on the other hand, the process proceeds to step S84.

In step S84, the virus processing section 73 attempts to eliminate the virus from the data to be read out by the OS. In other words, it attempts to repair the data to be read out by the OS. The process then proceeds to step S85 where the virus processing section 73 determines whether the data to be read out by the OS can be repaired. If the data can be repaired, the multi-function peripheral 1 proceeds to normal processing. If the data cannot be repaired, on the other hand, the virus processing section 73 deletes the data to be read out by the OS to eliminate the virus and stops the data transmission.

Also when the OS is to write data in the multi-function peripheral 1, the multi-function peripheral 1 determines whether data are infected with a virus before being written in the multi-function peripheral 1 in the same manner as the reading out of data. If the data are not infected with a virus, the multi-function peripheral 1 continues the writing processing. If they are infected with a virus, on the other hand, the multi-function peripheral 1 acts against the virus.

When the multi-function peripheral 1 detects a virus with real-time retrieval and deletes the virus-infected data, the control section 75 of the multi-function peripheral 1 determines whether it represents system data necessary for operating the multi-function peripheral 1. If the deleted data represent the system data, the control section 75 performs a process for restoring the data.

The system data are necessary for operating the multi-function peripheral 1, for example, the data of the OS and application programs. Specifically, examples of the system data include an executable file such as "EXE," a library file such as "DLL," and a configuration file such as "INI" to which the executable file and the library refer. The multi-function peripheral 1 performs the operations based on these system data. Basically, system data may never be changed throughout the service life of the multi-function peripheral 1.

On the other hand, user data stored in a user area as are described below represent image files that the user uses in the multi-function peripheral 1 and the information accompanying the files. Specifically, examples of the user data include an image file such as "JPEG," "TIFF," and "PDF," an "XML" file storing the bibliographical information of a file, a text file, and the like. User data may be changed in accordance with the intended use of the user.

Thus, the operations of a machine are regulated by system data. Therefore, even if the user data are infected with a virus and deleted, the multi-function peripheral 1 has no problem in the operations thereof so long as system data are safe.

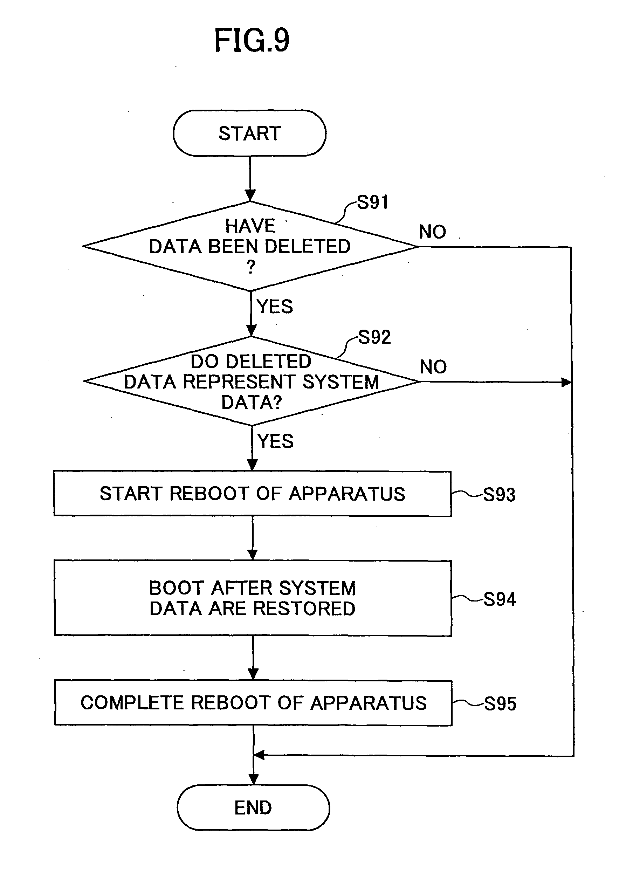

FIG. 9 is a flowchart showing a process example where virus-infected data detected with real-time retrieval are deleted. First, in step S91, the control section 75 determines whether virus-infected data have been deleted by the virus processing section 73. If they have not been deleted, the control section 75 completes the process as shown in the flowchart of FIG. 9.

If virus-infected data have been deleted by the virus processing section 73, on the other hand, the control section proceeds to step S92 to determine whether the deleted data represent system data. To determine whether they represent system data, four determination methods, for example, are given as follows.

A first determination method is to previously divide drives where system data and user data are stored.

The storage device 34 can be divided into partitions that have a common single drive. For example, the multi-function peripheral 1 divides the storage device 34 into three partitions and defines them as "C-drive," "E-drive," and "F-drive" where system data, user data, and temporary data are to be stored, respectively. Since the path of deleted data shows on which one of the drives the relevant file has been stored, the control section 75 can determine whether the deleted data represent system data.

A second determination method is to previously form a file path list of system data.

System data may never be changed throughout the service life of a machine. Accordingly, the multi-function peripheral 1 is capable of previously forming a file path list of system data at the time of its shipment from the factory. When it is detected that virus-infected data have been deleted, the control section 75 examines whether the file path of the deleted data belongs to the list. The control section 75 can recognize the data as system data if it belongs to the list and as user data if it does not belong to the list.

A third determination method is to distinguish data by putting a given keyword in a file name.

For example, since user data are created by the multi-function peripheral 1, it is necessarily required to prepend a keyword such as "rich_mfp_" to a file name at creation of the user data. Accordingly, when it is detected that virus-infected data have been deleted, the control section 75 can recognize the data as user data if the beginning of the file name contains "rich_mfp_" and as system data if it does not contain the keyword at the beginning.

A fourth determination method is to determine data in accordance with the extension of a file.

For example, since system data generally contain extensions such as "EXE," "DLL," and "INI," files having such extensions are determined to be system data. On the other hand, files having such extensions as "JPEG," "TIFF," and "PDF" are determined to be user data.

The fourth determination method can be used in combination with the first determination method. In the fourth determination method, for example, an extensions list of files stored in the C-drive as a system area is previously formed. When it is detected that virus-infected data have been deleted, the control section 75 searches for the drive name and the extension of the file. The control section 75 can recognize the data as system data if the drive name is "C" and the extension belongs to the extensions list and as user data if otherwise.

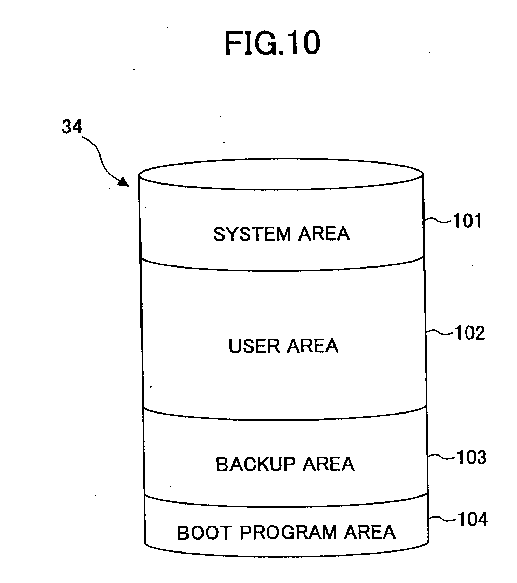

A description is now made of a process of the flowchart of FIG. 9 using the first determination method as an example. The storage device 34 is, for example, divided into four partitions as shown in FIG. 10, which include a system area 101, a user area 102, a backup area 103, and a boot program area 104. FIG. 10 is a schematic representation of data areas in a storage device.

The system area 101 is where data such as an OS and application programs necessary for operating the multi-function peripheral 1 are stored. The user area 2 is where image files that the user uses in the multi-function peripheral 1 and the information accompanying the files are stored.

The backup area 103 is where the backup data of the system area 101 are stored. The boot program area 104 is where the boot program is stored. The backup area 103 and the boot program area 104 have to be ones that cannot be accessed by an OS while the multi-function peripheral 1 is in operation so that they are prevented from being infected with a virus.

Accordingly, with the configuration where an OS and application programs are stored in the system area 101 of the storage device 34 and image files and the like are stored in the user area 102, it is possible for the control section 75 to distinguish system data from other data by searching the file path of deleted data and determining whether the deleted data are from the system area 1 or the user area 102.

If the deleted data are not the system data, the control section 75 determines that the multi-function peripheral 1 can be operated and completes the process of the flowchart of FIG. 9. If the deleted data are the system data, on the other hand, the control section 75 proceeds to step S93. In step S93, the control section 75 first starts the reboot of the multi-function peripheral 1 to restore the deleted data. At this time, the control section 75 records in the storage device 34 instructions to restore the system data at the following boot.

The process then proceeds to step S94 where the system area 101 is restored by the data of the backup area 103. The multi-function peripheral 1 performs the boot after the system area 101 is restored. To restore the data of the system area 101, the multi-function peripheral 1 first writes the boot program of the boot program area 104 in the memory unit 32 and executes the boot program. At its booting, the boot program determines whether there have been issued instructions to restore the system data. If the instructions have been issued, the boot program copies the data of the backup area 103 into the system area 101.

After the completion of the copying, the boot program proceeds to step S95 where the OS is booted to complete the reboot. In accordance with the process shown in the flowchart of FIG. 9, the multi-function peripheral 1 can restore the system data to the status that existed before they were infected with a virus, thereby assuring that multi-function peripheral 1 can be in a normally operable state. The data stored in the backup area 103 may be created by compressing the backup data of the system area 101. In this case, when the data of the backup area 103 are copied into the system area 101, the boot program expands the compressed data.

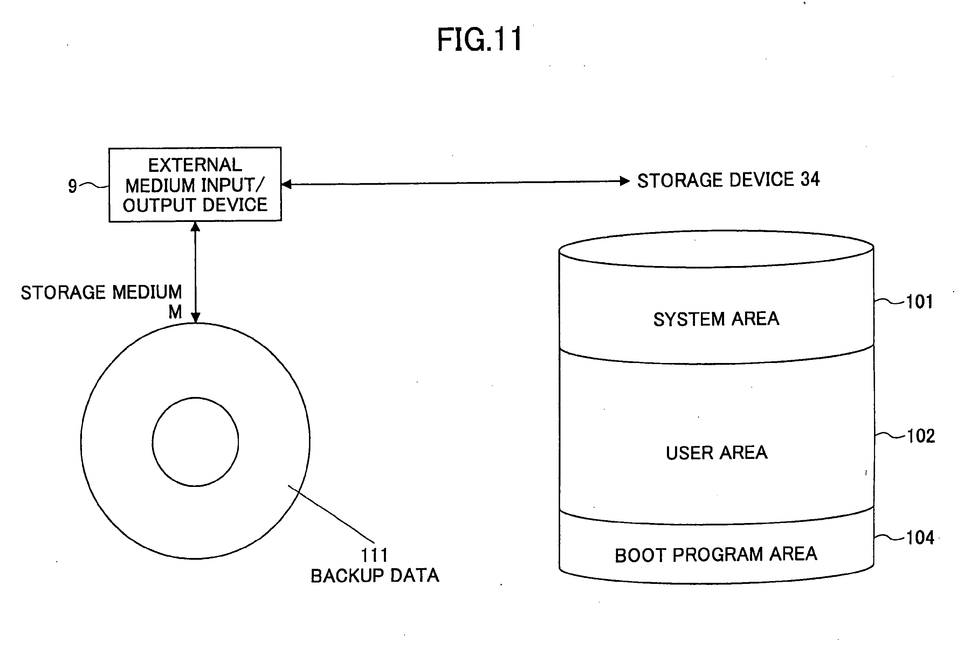

Note that as a method of restoring system data, the data of the storage medium M may also be used. FIG. 11 is a schematic representation where system data are restored by the use of a storage medium.

The case of FIG. 11 does not need the backup area 103 in the storage device 34 compared with that of FIG. 10. Backup data 111 are the backup data of the system area 101 stored in the storage medium M. The backup data 111 may be created by compressing the data of the system area 101 and storing the compressed data in the storage medium M.

When the data of the system area 101 are restored, the boot program of the boot program area 104 is first written in the memory unit 32 and the boot program is then executed. At its booting, the boot program determines whether instructions have been issued to restore system data. If the instructions have been issued, the boot program reads the backup data 111 in the storage medium M via the external medium input/output device 9 and copies them into the system area 101. At this time, if the backup data 111 have been created by compressing the data of the system area 101, the boot program expands the data to be copied.

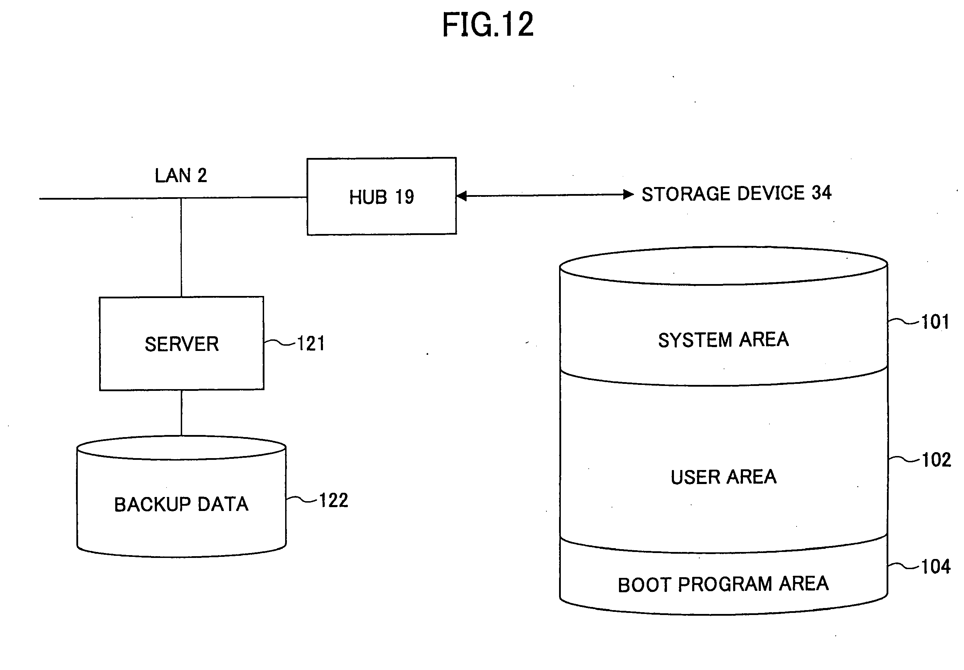

Furthermore, as another method of restoring system data, backup data 122 stored in a server 121 on the LAN 2 may be used. FIG. 12 is a schematic representation where system data are restored by the use of backup data stored in a server.

The case of FIG. 12 does not need the backup area 103 in the storage device 34 compared with that of FIG. 10. A server 121 is positioned on the LAN 2 and holds backup data 122 of the system area 101. The backup data 122 may be created by compressing the data of the system area 101 and stored.

When the data of the system area 101 are restored, the boot program of the boot program area 104 is first written in the memory unit 32 and the boot program is then executed. At its booting, the boot program determines whether instructions have been issued to restore system data. If the instructions have been issued, the boot program is connected to the server 121 via the HUB 19. The server 121 transmits the backup data 122 to the multi-function peripheral 1. The boot program receives the backup data via the HUB 19 and copies them into the system area 101. At this time, if the backup data 122 have been created by compressing the data of the system area 101, the boot program expands the data to be copied.

Furthermore, as another method of restoring system data, writing data in the system area 101 may be prevented instead of restoring the system data from backup data. In accordance with this method, data may be written in another area of the storage device 34 when required to be written, thereby simulating that the data have been written in the system area 101. Examples of related art cases achieving such an operation include EWF (Embedded Enhanced Write Filter) of Windows (Trade Mark) .

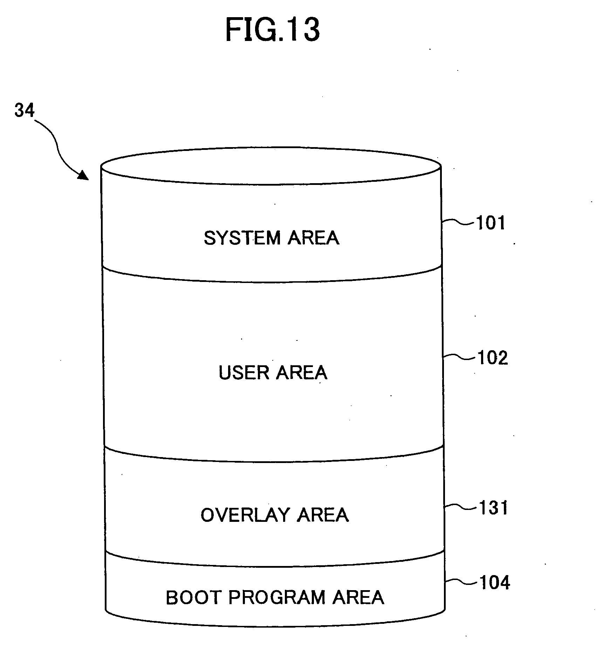

FIG. 13 is a schematic representation of data areas in a storage device where writing data is prevented in the system area by the use of EWF.

The case of FIG. 13 does not need the backup area 103 in the storage device 34 compared with that of FIG. 10, but it includes an overlay area 131 instead. With EWF, if writing data in the system area 101 is attempted, the data are caused to be written in the overlay area 131. It is thus made possible to perform the operation while simulating that the data have been written in the system area 101.

If a virus is detected in system data, it is required to perform a reboot in such a manner as not to load the data of the overlay area 131 during the boot-up. Since no data have been written in the system area 101, it is possible to restore the system data to the status that existed before they were infected with a virus if the data of the overlay area 131 are not loaded at the boot.

Note that the present invention may be applied not only to a system composed of plural equipment items (such as a host computer, an interface device, a reader, and a printer), but also to an apparatus (such as a copier and a facsimile machine) composed of one equipment item.

An aspect of the present invention may also be attained in the following manner. In other words, a recording medium containing the program code of the software achieving the functions of this embodiment as described above is provided in a system or an apparatus, thereby allowing the computer (CPU or MPU) of the system or the apparatus to read out and execute the program code stored in the recording medium.

In this case, the program code read out from the storage medium may achieve the functions of this embodiment as described above. The recording medium storing the program code may constitute an aspect of the present invention.

As a recording medium that supplies program code, a flexible disk, a hard disk, an optical disk, a magneto-optical disk, a CD-ROM, a CD-R, a magnetic tape, a non-volatile memory card, a ROM, or the like can be used. Furthermore, the functions of this embodiment as described above may be achieved not only by the execution of the program code read out from a computer, but also by the partial or entire execution of actual processing by the OS (Operating System) running on a computer based on the instructions from the program code.

Furthermore, the functions of this embodiment as described above may also be achieved in the following manner. In other words, after the program code read out from a recording medium is written in a memory provided in a functional expansion board inserted into a computer and a functional expansion unit connected to a computer, the CPU and the like provided in the functional expansion board and the functional expansion unit partially or entirely execute actual processing based on the instructions from the program code.

According to this embodiment of the present invention, if a virus is contained in data to be read out/written from/in the apparatus and the virus-infected data are deleted, it is determined whether the data are necessary for operating the apparatus and the data are restored if they are necessary, thereby making it possible to automatically restore the data to a normal state even if they are infected with a virus.

According to this embodiment of the present invention, the backup data stored in the storage device of the image forming apparatus are read to be used for restoring data. Therefore, it is possible to restore the data only with the storage device without using other devices. In this case, since the data of the storage device are copied, a process can be performed at relatively high speed.

According to this embodiment of the present invention, the backup data stored in the storage medium are read to be used for restoring data via the external medium input/output device connected to the image forming apparatus. Therefore, it is not necessary to store the backup data in the storage device, thereby allowing the maximum use of the storage capacity of the storage device. Furthermore, if writing data in the storage medium is not permitted, the data to be restored may have no possibility of being infected with a virus.

According to this embodiment of the present invention, the backup data stored in the server connected to the image forming apparatus via a network are received to be used for restoring data. Therefore, it is not necessary to store the backup data in the storage device, thereby allowing the maximum use of the storage capacity of the storage device. Furthermore, since the backup data are stored in the server, it is possible to acquire the backup data by connecting to the server even in a case where plural image forming apparatuses are required to be restored.

According to this embodiment of the present invention, writing data in the area where the data necessary for operating the image forming apparatus are stored is performed in another area of the storage device, thereby simulating that the data have been written and preventing the writing of data in the area where the data necessary for operating the apparatus are stored. Therefore, it is possible to restore the data only with the storage device without using other devices. Furthermore, it is not necessary to copy data, thereby making it possible to perform the restoration at high speed.

The present invention is not limited to the embodiments specifically disclosed hereinabove, and it can be modified in various ways without departing from the scope of the claims.

The present application is based on Japanese Priority Patent Application No. 2006-221260, filed on August 14, 2006, the entire contents of which are hereby incorporated by reference.

## Claims

1. An image forming apparatus that determines whether a computer virus is contained in data and repairs or deletes the data found infected with the computer virus, the apparatus **characterized by**:
determination means for determining whether the data are necessary for operating the apparatus when the data found infected with a computer virus are repaired or deleted; and
restoration means for restoring the data if it is determined that the data are necessary for operating the apparatus.

2. The image forming apparatus according to claim 1, further comprising:
storage means composed of divided plural areas storing the data; wherein
the determination means determines whether the data are necessary for operating the apparatus in accordance with the area where the data have been stored.

3. The image forming apparatus according to claim 1, further comprising:
storage means for storing the data; wherein
the determination means determines whether the data are necessary for operating the apparatus in accordance with information indicating a location of the data necessary for operating the apparatus in the storage means.

4. The image forming apparatus according to claim 1, wherein
the determination means determines whether the data are necessary for operating the apparatus in accordance with presence or absence of a given character string in a file name of the data.

5. The image forming apparatus according to claim 1, wherein
the determination means determines whether the data are necessary for operating the apparatus in accordance with a file name extension of the data.

6. The image forming apparatus according to claim 1, further comprising:
storage means composed of divided plural areas storing the data, with one area storing the data necessary for operating the apparatus and another area storing backup data of the data necessary for operating the apparatus; wherein
the restoration means restores the data necessary for operating the apparatus by using the backup data.

7. The image forming apparatus according to claim 1, further comprising:
storage means composed of divided plural areas storing the data, with one area storing the data necessary for operating the apparatus; and
external storage means other than the storage means, where backup data of the data necessary for operating the apparatus are stored; wherein
the restoration means restores the data necessary for operating the apparatus by using the backup data.

8. The image forming apparatus according to claim 1, further comprising:
storage means composed of divided plural areas storing the data, with one area storing the data necessary for operating the apparatus; wherein
the restoration means restores the data necessary for operating the apparatus by using backup data of the data necessary for operating the apparatus, which are acquired from a server connected via a given network.

9. The image forming apparatus according to claim 1, further comprising:
storage means composed of divided plural areas storing the data, which stores the data necessary for operating the apparatus in one area and write data for the data necessary for operating the apparatus in another area so as to simulate that writing has been performed with respect to the data necessary for operating the apparatus; wherein
the restoration means restores the data necessary for operating the apparatus by preventing the use of the write data for the data necessary for operating the apparatus, which are stored in the another area.

10. A data restoration method of an image forming apparatus that determines whether a computer virus is contained in data and repairs or deletes the data found infected with the computer virus, the method **characterized by**:
a determination step of determining whether the data are necessary for operating the apparatus when the data found infected with a computer virus are repaired or deleted; and
a restoration step of restoring the data if it is determined that the data are necessary for operating the apparatus.

11. The data restoration method according to claim 10, wherein
the determination step determines whether the data are necessary for operating the apparatus in accordance with the area where the data have been stored in storage means composed of divided plural areas storing the data.

12. The data restoration method according to claim 10, wherein
the determination step determines whether the data are necessary for operating the apparatus in accordance with information indicating a location of the data necessary for operating the apparatus in storage means storing the data.

13. The data restoration method according to claim 10, wherein
the determination step determines whether the data are necessary for operating the apparatus in accordance with presence or absence of a given character string in a file name of the data.

14. The data restoration method according to claim 10, wherein
the determination step determines whether the data are necessary for operating the apparatus in accordance with a file name extension of the data.

15. The data restoration method according to claim 10, wherein
the restoration step restores the data necessary for operating the apparatus by using backup data stored in storage means in which the data necessary for operating the apparatus are stored in one area and the backup data of the data necessary for operating the apparatus are stored in another area among divided plural areas storing the data.

16. The data restoration method according to claim 10, wherein
the restoration step restores the data necessary for operating the apparatus by using backup data stored in external storage means other than storage means, the external storage means having the backup data of the data necessary for operating the apparatus in the storage means in which the data necessary for operating the apparatus are stored in one area among divided plural areas storing the data.

17. The data restoration method according to claim 10, wherein
the restoration step restores the data necessary for operating the apparatus by using backup data stored in a server connected via a given network, the server having the backup data of the data necessary for operating the apparatus in storage means in which the data necessary for operating the apparatus are stored in one area among divided plural areas storing the data.

18. The data restoration method according to claim 10, wherein
the restoration step restores the data necessary for operating the apparatus by preventing the use of write data stored in storage means in which the data necessary for operating the apparatus are stored in one area and the write data for the data necessary for operating the apparatus are stored in another area among divided plural areas storing the data so as to simulate that writing has been performed with respect to the data necessary for operating the apparatus.

19. A computer-readable recording medium having recorded therein a program which causes an image forming apparatus, the image forming apparatus including an arithmetic processing unit and a storage device that determines whether a computer virus is contained in data and repairs or deletes the data found infected with the computer virus, to perform:
a determination step of determining whether data are necessary for operating the apparatus when the data found infected with a computer virus are repaired or deleted; and
a restoration step of restoring the data if it is determined that the data are necessary for operating the apparatus.
